Europäisches Patentamt

European Patent Office

Office européen des brevets

(11) Veröffentlichungsnummer: **0 332 957**

**A1**

## (12) EUROPÄISCHE PATENTANMELDUNG

(21) Anmeldenummer: 89103825.9

(22) Anmeldetag: 04.03.89

(51) Int. Cl.⁴: **G05D 23/19**

(30) Priorität: 18.03.88 CH 1055/88

(43) Veröffentlichungstag der Anmeldung:
20.09.89 Patentblatt 89/38

(84) Benannte Vertragsstaaten:
CH DE FR IT LI NL SE

(71) Anmelder: **TEM AG für Elektronik**
**Triststrasse 8**
**CH-7000 Chur(CH)**

(72) Erfinder: **Guidon, Willi**
**Via Sableun**
**CH-7402 Bonaduz(CH)**

(74) Vertreter: **Schmauder, Klaus Dieter et al**
**c/o Schmauder & Wann Patentanwaltsbüro**
**Nidelbadstrasse 75**
**CH-8038 Zürich(CH)**

(54) **Heizungssteuergerät.**

(57) Das Heizungssteuergerät weist einen Datenspeicher (4) einen Programmspeicher (6), einen Mikroprozessor (2) und eine Bedienungsplatte (36) auf. Zur Vereinfachung der Bedienung besteht die Bedienungsplatte aus einer transparenten Schaltplatte (38) mit individuell ansteuerbaren Schaltelementen unter der ein Multifunktionsdisplay (46) zur direkten Anzeige der Einstellparameter und der aktivierten Anzeigefelder sowie von aktivierten Tastenfeldern angeordnet ist. Die Schaltplatte (38) weist auf: Tastenfelder (40₁₋₅), die bestimmten Betriebsarten fest zugeordnet sind, Tastenfelder (44₁₋₄), die bestimmten Gliedern der Heizungsanlage fest zugeordnet sind und Tastenfelder (42₁₋₇), die wahlweise menueartig verschiedenen Funktionen zugeordnet und entsprechend bezeichnet werden können.

Fig. 5

## Heizungssteuergerät

Die Erfindung betrifft ein Heizungssteuergerät gemäss Oberbegriff des Anspruches 1.

Heizungssteuergeräte der eingangs genannten Art sind bekannt, so beispielsweise aus der CH-PS 635 204. Dieses Heizungssteuergerät weist einen von einer Uhr periodisch abgefragten Speicher auf, in dem vorwählbare Betriebsarten der Anlage gespeichert sind, die an bestimmten Tagen, während der ganzen Tagesdauer oder ab vorwählbarer Zeiten bestimmter Tagestypen gefordert sind und als Sollwertbefehle an ein die Anlage beeinflussendes Steuer- oder Regelgerät abgegeben werden. Für die Programmierung und Sichtbarmachung der bereits gespeicherten Programme ist eine erste Gruppe von Tasten vorhanden. Abgesondert von dieser ersten Gruppe von Tasten ist eine zweite Gruppe von Tasten verschiedenen Betriebszuständen der Anlage zugeordnet. Durch Betätigen einer entsprechenden Taste der zweiten Tastengruppe kann jederzeit ein Betriebszustand im Sinne einer Ueberbrückung des momentan ablaufenden Programmes mit gleichzeitiger Anzeige abgerufen werden. Ein gleichzeitiges Betätigen je einer Taste der ersten Tastengruppe und einer Taste der zweiten Tastengruppe löst eine Neuprogrammierung des entsprechenden Speichers aus. Diese Heizungssteuergerät ist relativ schwer zu bedienen, da abgesehen von der direkt angezeigten Zeit und symbolisch angezeigten Wochentagen für alle Betriebszustände nur Signallampen vorhanden sind, aus denen noch nicht ersichtlich ist, was in den einzelnen Speichern gespeichert ist und was vor sich geht. Ausserdem ist das Programmieren umständlich, da stets zwei oder mehr Tasten gleichzeitig gedrückt werden müssen und dann auch noch nicht ersichtlich ist, was beim Drücken der Tasten tatsächlich vor sich geht. Demnach sind auch die Einstellmöglichkeiten begrenzt.

Aufgabe der Erfindung ist es, ein Heizungssteuergerät der eingangs genannten Art zu schaffen, das wesentlich bedienungsfreundlicher und flexibler ist.

Die gestellte Aufgabe wird bei dem eingangs genannten Heizungssteuergerät durch die kennzeichnenden Merkmale des Anspruches 1 gelöst.

Durch die Kombination einer Tastenfelder aufweisenden Schaltplatte mit einem Multifuntionsdisplay, welche beide mit einem Mikroprozessor verbunden sind und entsprechend angesteuert werden können, lässt sich eine direkte Anzeige der Einstellparameter wie beispielsweise Zeit, Temperaturverlauf, Wochentag, hydraulisches Schaltschema usw. sowie eine direkte Anzeige der aktivierten Anzeigefelder sowie der aktivierten Tastenfelder bewirken. An jedem Tastenfeld ist dann bereits optisch ersichtlich, wozu es dient und im Falle der Betätigung wird sofort angezeigt, was es auslöst. Es ergibt sich damit eine wesentliche Vereinfachung der Bedienung und Verbesserung der Uebersichtlichkeit eines solchen Heizungssteuergerätes.

Im vorliegenden Fall ist das Merkmal Wärmeerzeuger in allgemeinster Form zu verstehen und soll sowohl direkte Wärmeerzeuger wie Brenner und Feuerungen, sowie auch indirekte Wärmeerzeuger wie Wärmetauscher beinhalten.

Vorteilhafte Ausgestaltungen des Heizungssteuergerätes sind in den Ansprüche 2 bis 12 beschrieben.

Besonders vorteilhaft ist eine Ausgestaltung nach Anspruch 2, da dann den Grundbetriebsarten jeweils ein feststehendes Tastenfeld zugeordnet ist, sodass eine solche Betriebsart lediglich durch Betätigen des Tastenfeldes ausgelöst werden kann. Durch Beleuchtung des Tastenfeldes oder durch Inversschalten oder durch Verändern der Darstellung kann dann angezeigt werden, dass diese Betriebsart eingeschaltet ist, d.h. mittels des Heizungssteuergerätes gefahren wird.

Besonders vorteilhaft ist eine Ausgestaltung nach Anspruch 3, wodurch die einzelnen Parameter abgerufen und kontrolliert oder eingestellt werden können. Dabei ist es besonders vorteilhaft, dass durch das Weiterschalten mittels eines Tastenfeldes in verschiedene Bedienungsebenen nur eine beschränkte Anzahl von Anzeigefeldern und Tastenfeldern erforderlich sind, die in jeder Betriebsebene in der dannzumal erforderlichen Anzahl und Funktion erscheinen und zum Einsatz kommen können. Besonders vorteilhaft ist auch eine Ausgestaltung nach Anspruch 4, da dann an einem Hydraulikschema der entsprechenden Heizungsanlage bestimmten Aggregaten einerseits Tastenfelder und andererseits Anzeigefelder zugeordnet sind, sodass einerseits im Hydraulikschema das entsprechende Aggregat durch Tastendruck angewählt werden kann und andererseits der jeweilige Betriebszustand durch entsprechende Umschaltung der Anzeigefelder sofort erkennbar ist. Das Hydraulikschema kann durch Bedrucken der Bedienungsplatte, Anordnen einer mit dem Hydraulikschema bedruckten Folie oder insbesondere nach Anspruch 5 erzeugt sein. In letzterem Falle ist eine Aenderung des Hydraulikschemas durch Umprogrammierung auf einfache Weise möglich.

Besonders vorteilhaft ist eine Ausgestaltung nach Anspruch 6, da dann die in einer Betriebsart gegebenen Parameter mittels der Tastenfelder zweiter Art menuartig abgerufen und angezeigt und/oder eingestellt werden können.

Zweckmässig ist auch eine Ausgestaltung nach Anspruch 7, die ein Umschalten des Heizungssteuergerätes von Automatikbetrieb auf Handbetrieb ermöglicht, sodass die Heizungsanlage nach bestimmten, von Hand eingestellten Parametern gefahren werden kann. Besonders vorteilhaft ist eine Ausgestaltung nach Anspruch 8, die es ermöglicht, einen programmierten Rechner anzuschliessen, der die Funktionen des Heizungssteuergerätes durch Simulieren von Betriebsabläufen überprüfen kann und/oder eine Einstellung des Heizungssteuergerätes ermöglicht, da die Auswirkung an einer Veränderung einzelner Parameter sofort am Bildschirm des programmierten Rechners sichtbar gemacht und überprüft werden kann. Ferner ist es möglich, mit dem Rechner Messdaten der im Betrieb befindlichen Heizungsanlage zu erfassen und am Bildschirm anzuzeigen oder mittels eines Schreibgerätes aufzuzeichnen.

Besonders zweckmässig ist auch eine Ausgestaltung nach Anspruch 9, wodurch bestimmte Parameter des Heizungssteuergeräts vor Manipulationen Unbefugter geschützt werden können.

Vorteilhaft ist auch eine Ausgestaltung nach Anspruch 10, wodurch es möglich ist, anzuzeigen in welchem Tagesabschnitt welche Heizleistung erbracht wird. Weiter ist eine Ausgestaltung nach Anspruch 11 von Vorteil, die jeweils den Verschmutzungsgrad des Brennerraumes und/oder des Kamins oder eine sonstige Störung erfasst, die eine Wartung erforderlich machen.

Besonders vorteilhaft ist auch eine Ausbildung nach Anspruch 12, die es ermöglicht, beispielsweise den Teil der Bedienungsplatte mit dem Hydraulikschema räumlich getrennt von dem Teil mit den Tastenfeldern anzuordnen.

Ausführungsbeispiele des Gegenstandes der Erfindung werden nachfolgend anhand der Zeichnungen näher beschrieben, dabei zeigen:

Figur 1 die Frontansicht eines Heizungssteuergerätes im Normalbetrieb mit Standardanzeige (Bedienungsebene I);

Figur 2 einen an das Heizungssteuergerät anschliessbaren, programmierten Rechner;

Figur 3 einen Berechtigungsschlüssel für das Heizungssteuergerät;

Figur 4 die Bedienungsplatte des Heizungssteuergerätes mit Schaltplatte und Multifunktionsdisplay, im Querschnitt;

Figur 5 Blockdiagramm des Heizungssteuergerätes; und

Figuren 6 bis 17 Frontansichten des Heizungssteuergerätes in verschiedenen Betriebsphasen.

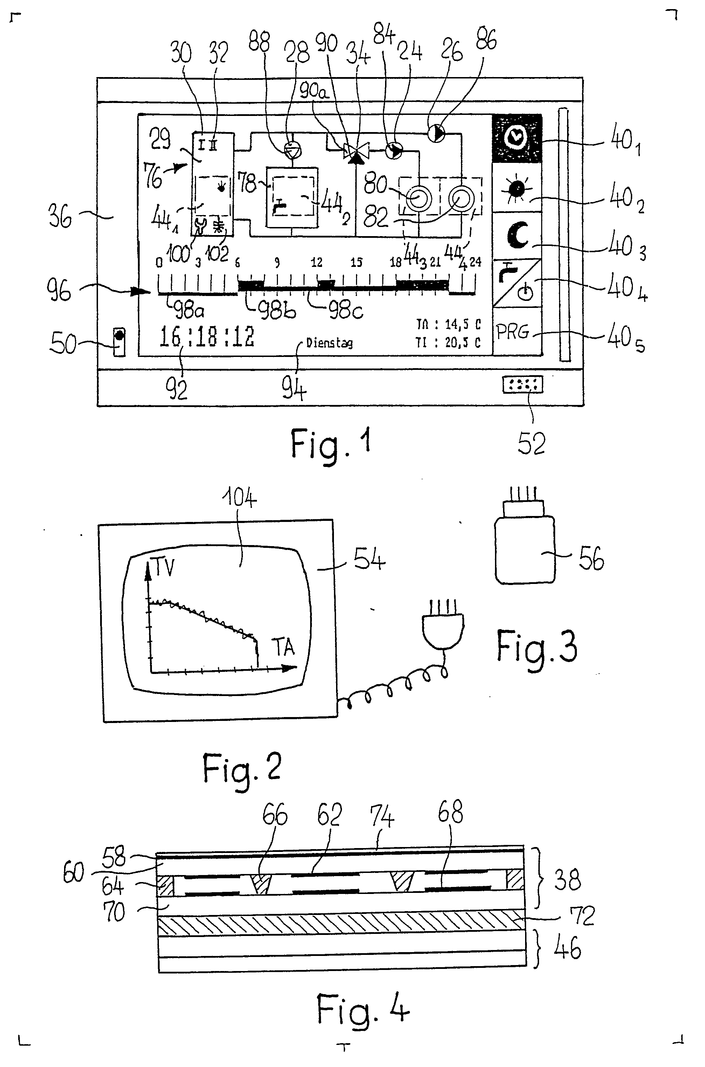

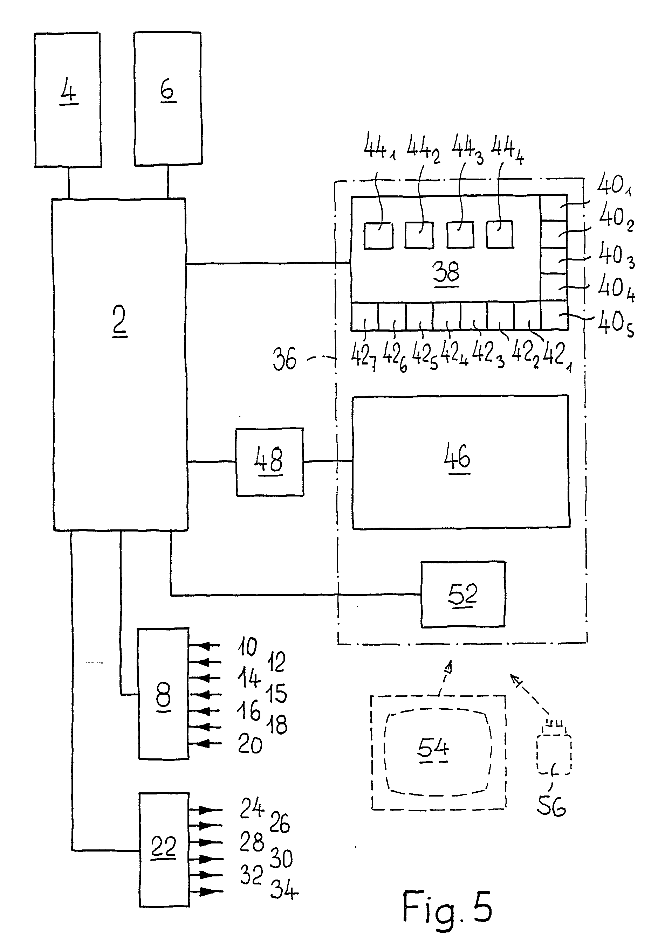

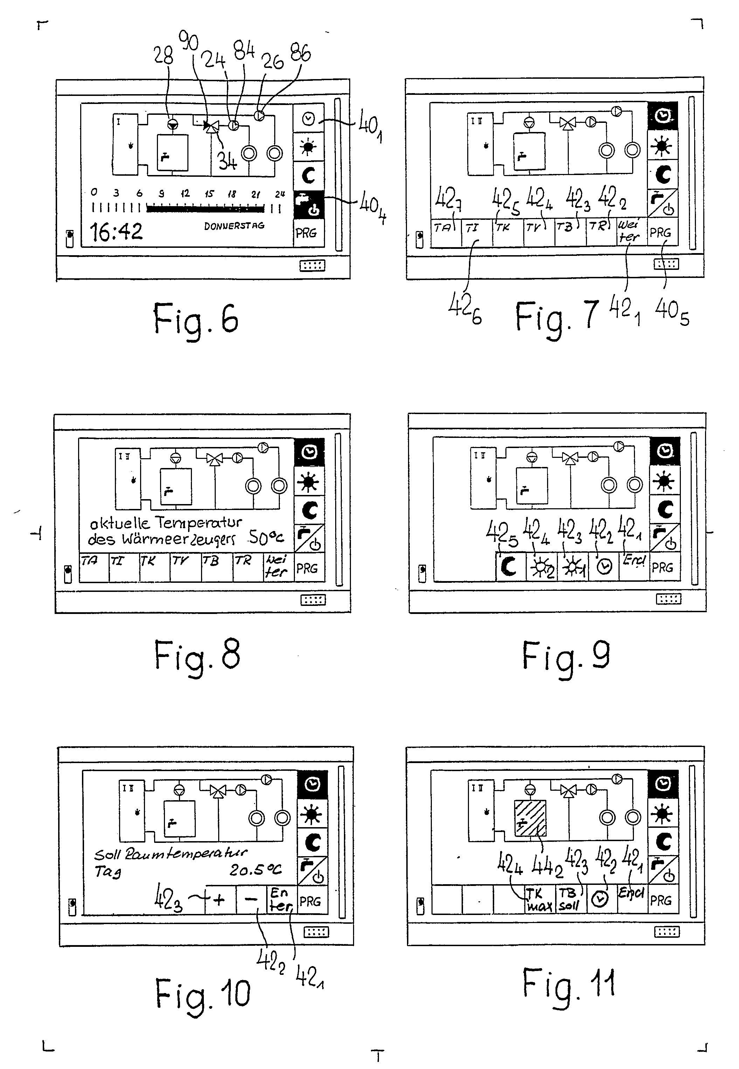

Die Figuren 1 bis 5 zeigen den grundsätzlichen Aufbau des Heizungssteuergerätes. Das in Figur 1 in seiner Frontansicht dargestellte Heizungssteuergerät enthält, wie aus Figur 4 hervorgeht, einen Mikroprozessor 2, an dem einerseits ein Datenspeicher 4 für die einzelnen gespeicherten Parameter und andererseits ein Programmspeicher 6 für die Steuerprogramme einerseits der Heizungsanlage und andererseits der Bedienungsplatte angeschlossen sind. Weiter ist der Mikroprozessor mit einem Eingang verbunden, der beispielsweise Anschlüsse für Aussenfühler 10, Raumfühler 12, Kesselfühler 14, Brauchwasserfühler 16, Rauchgasfühler 18, Fernversteller 20 aufweist. Weiter ist an dem Mikroprozessor 2 ein Ausgang 22 angeschlossen mit Anschlüssen für eine erste Umwälzpumpe 24, eine zweite Umwälzpumpe 26, eine Brauchwasserladepumpe 28, einen Wärmeerzeuger 29 mit einem ersten Heizkessel 30 und einem zweiten Heizkessel 32 und ein Mischorgan 34. Das Heizungssteuergerät ist weiter mit einer Bedienungsplatte 36 ausgestattet, die einerseits aus einer transparenten Schaltplatte 38 besteht, die mit dem Mikroprozessor 2 verbunden ist und Tastenfelder $40_1$ bis $40_5$ von erster Art, Tastenfelder $42_1$ bis $42_7$ von zweiter Art sowie Tastenfelder $44_1$ bis $44_4$ von dritter Art aufweist. Unter der Schaltplatte 38 ist ein Multifunktionsdisplay 46 angeordnet, welches über ein Anzeigesteuergerät 48 ebenfalls mit dem Mikroprozessor 2 verbunden ist. Der Mikroprozessor 2, der Datenspeicher 4, der Programmspeicher 6 und das Anzeigensteuergerät 48 können in einem Singelchipprozessor vereinigt sein. Die Bedienungsplatte 36 enthält weiter einen Umschalter 50 zum Umschalten von Automatikbetrieb auf Handbetrieb und umgekehrt. Ferner ist ein Anschluss 52 vorhanden, der als Schnittstelle ausgebildet ist und einerseits zum Anschluss eines programmierten Rechners 54 Fig. 2), beispielsweise eines Personal-Computers (PC), und andererseits zum Einstecken eines Berechtigungsschlüssels 56 (Fig. 3) dient.

Die aus dem Multifunktionsdisplay 46 und der Schaltplatte 38 aufgebaute Bedienungsplatte ist von bekannter Bauart, wie sie beispielsweise in Figur 4 dargestellt ist und von der Optrex Corporation unter der Bezeichnung transparent touch panel mit LCD Module hergestellt und vertrieben wird. Die Schaltplatte 38 wird dabei gebildet aus einem transparenten Hartüberzug 58, unter dem sich ein Frontseitenpolyesterfilm 60 befindet, an den sich eine Frontseitenelektrode 62 anschliesst. Ueber äussere Dichtungen 64 und Distanzhalter 66 ist die Rückseitenelektrode 68 angeschlossen. Es folgt dann der Rückseitenpolyesterfilm 70. Ueber eine Pufferschicht 72 ist schliesslich der Multifunktionsdisplay 46 angeschlossen, der aus einer Vielzahl von nicht näher dargestellten punktförmigen Flüssigkristallen besteht, die einzeln ansteuerbar sind, sodass Darstellungen der verschiedensten Art angezeigt werden können. Die Bedienungsplatte 36 weist schliesslich noch eine transparente bedruckte Folie 74 auf, auf der ein Hydraulikschema 76 dargestellt ist. Allerdings ist es auch möglich und vorteilhafter anstelle der Folie 74 das Hydraulikschema direkt mittels des Multifunktionsdisplays 46 darzustellen.

Wie aus Figur 1 hervorgeht, sind an der Bedienungsplatte die Tastenfelder $40_1$ bis $40_5$ permanent sichtbar und mit symbolischen Darstellungen versehen, welche die fest zugeordneten Betriebsarten angeben. So dient das Tastenfeld $40_1$ UHR für die Betriebsart nach Schaltuhr, das Tastenfeld $40_2$ SONNE für Tagesbetrieb, das Tastenfeld $40_3$ MOND für reduzierten Nachtbetrieb, das Tastenfeld $40_4$ HAHN für Sommerbetrieb mit Brauchwasser, das Tastenfeld $40_5$ PRG zur Programmwahl, d.h. Umschaltung von einer Bedienungsebene in eine andere. Weiter sind permanent dargestellt das Hydraulikschema 76, wobei dem Wärmeerzeuger 29 mit den ersten und zweiten Kesseln 30 und 32 ein Tastenfeld $44_1$, dem Brauchwasserspeicher 78 das Tastenfeld $44_2$ und dem Hauptheizkreis 80 das Tastenfeld $44_3$ und dem Nebenheizkreis 82 das Tastenfeld $44_4$ zugeordnet sind. Die Tastenfelder $44_1$ bis $44_4$ sind ebenfalls fest bestimmten Aggregaten der Heizungsanlage zugeordnet. Ferner sind den Symbolen für die erste Umwälzpumpe 24, die zweite Umwälzpumpe 26, die Brauchwasserladepumpe 28 und das Mischorgan 34 Anzeigeelemente 84, 86, 88 und 90, 90a zugeordnet, die den jeweiligen Betriebszustand anzeigen, wobei eine helle Darstellung "Ausserbetrieb" und eine dunkle bzw. inverse Darstellung "Inbetrieb" bedeuten.

Neben diesen permanent sichtbaren Tastenfeldern und Anzeigeelementen sind noch Anzeigeelemente vorhanden, die wechseln und nur bei Bedarf sichtbar sind. Hierzu gehören die in Figur 1 im Normalbetrieb und bei Standardanzeige sichtbare Uhrzeitanzeige 92, die Wochentaganzeige 94 und der Betriebsprogrammbalken 96, mit seinen Anzeigebereichen 98a, 98b, 98c für reduzierten Nachtbetrieb, vollen Tagbetrieb und reduzierten Tagbetrieb. Die Anzeigeelemente 100, 102 im Wärmeerzeugersymbol erscheinen nur dann, wenn eine Brennerwartung bzw. Kaminwartung erforderlich sind. Auch die Tastenfelder $42_1$ bis $42_7$ sind nur nach Bedarf sichtbar und entsprechend der jeweils angewählten Funktion bezeichnet, es sind also Menue-Tasten, die entsprechende Menuebilder- bzw. -bezeichnungen erhalten, wie nachfolgend noch im einzelnen ausgeführt wird.

Die Funktionsweise des Heizungssteuergerätes ist auf vier Bedienungsebenen I bis IV aufgeteilt, die entsprechend anwählbar sind. Selbstverständlich können noch mehr aber auch weniger Anzeigeelemente und Tastenfelder für ähnliche oder andere Parameter und Aggregate vorhanden sein, je nach Art der Heizungsanlage und des gewünschten Bedienungskomfortes.

Bedienungsebene I:

Die Bedienungsebene I ist die Normalebene, in die das Heizungssteuergerät nach gewisser Zeit automatisch zurückkehrt, wenn in den anderen Bedienungsebenen keine Funktionen ausgeführt werden oder in die es durch Druck auf das Tastenfeld $42_1$ END zurückkehrt.

Im Normalbetrieb werden beispielsweise angezeigt:
76 Hydraulikschema mit Betriebszustand der Aggregate
96 Betriebsprogrammbalken
92 Uhrzeit
94 Wochentag
TA Aussentemperatur
TI Raumtemperatur
$40_1$ Tastenfeld Betrieb nach Urzeit
$40_2$ Tastenfeld Tagbetrieb
$40_3$ Tastenfeld Nachtbetrieb
$40_4$ Tastenfeld Brauchwasserbetrieb
$40_5$ Tastenfeld Programmwahl
100 Brennerwartung
102 Kaminwartung

Mittels der Tastenfelder $40_1$ bis $40_4$ können, wie bereits erwähnt, 4 Betriebsarten durch Tastendruck direkt angewählt werden. Der Schaltzustand wird angezeigt, indem das entsprechende Tastenfeld von Hell auf Dunkel wechselt, d.h. invertiert.

Bedienungsebene II:

In der Bedienungsebene II können Temperaturen abgefragt werden sowie Einstellbarkeiten bezüglich der Uhrzeit 92 und des Sollwertes der Raumtemperatur TI vorgenommen werden.

Durch Betätigen des Tastenfeldes $40_5$ PRG gelangt man in die Bedienungsebene II. Am unteren Rand der Bedienungsplatte 36 erscheinen die Tastenfelder $42_1$ bis $42_7$. Die Tastenfelder sind mit den entsprechenden Menuebildern oder Menuezeichen bezeichnet. Mit dem Tastenfeld $42_1$ WEITER können sämtliche Parameter dieser Bedienungsebene angewählt werden. Wechselt das Tastenfeld $42_1$ von WEITER in END, so sind keine weiteren Parameter mehr vorhanden. Durch Betätigen des Tastenfeldes $42_1$ END kehrt das Heizungssteuergerät wieder in die erste Betriebsebene I zurück.

Mittels der Tastenfelder $42_1$ bis $42_7$ können beispielsweise folgende während der Abfrage gegebene Temperaturen abgefragt und angezeigt werden (Fig. 7):
TA Temperatur Aussen
TI Temperatur Raum
TK Temperatur Wärmeerzeuger
TV Temperatur Vorlauf
TB Temperatur Brauchwasserspeicher

TR Temperatur Rauchgas
WEITER Weiterschalten

Durch Betätigen des Tastenfeldes $42_1$ WEITER können beispielsweise die Tastenfelder der Figur 9 sichtbar gemacht werden:
END Ende
UHR Einstellen Uhrzeit
SONNE 1 Einstellen Tagtemperatur voll
SONNE 2 Einstellen Tagtemperatur reduziert
MOND Einstellen Nachttemperatur

Bedienungsebene III:

In der Bedienungsebene III können spezifische Parameter der Heizungsanlage abgefragt und eingestellt werden, sofern sie nicht gesperrt und nur mit Berechtigungsschlüssel 56 zugänglich sind.

Durch Betätigen eines Tastenfeldes $44_1$ bis $44_4$ für ein Aggregat der Heizungsanlage gelangt man in die Bedienungsebene III und es erscheinen am unteren Rand der Bedienungsplatte Tastenfelder $42_1$ bis $42_7$ mit der zugehörigen Bezeichnung der Parameter. Mittels dieser Tastenfelder können die Parameter angewählt und eingestellt werden. Der Vorgang ist derselbe wie in der Bedienungsebene II, wobei jedoch geschützte Parameter, die nur von berechtigten Personen, wie einem Wartungsfachmann, eingestellt werden dürfen, zwar abgefragt, aber nicht verändert werden können.

Es können beispielsweise folgende Parameter abgefragt und mindestens teilweise eingestellt werden:
ØT1 Temperatur Raum (Mittelwert)
ØTA Temperatur Aussen (Mittelwert)

Hauptheizkreis:

F1 Fixpunkt(Vorlauftemperatur)-Einstellung der Heizkurve bei +15° TA
F*1 optimierter Fixpunkt
K1 Klimapunkt(Vorlauftemperatur)-Einstellung der Heizkurve bei -10° C TA
K*1 optimierter Klimapunkt
tve1 Vorhaltezeit für Einschalten der Heizungsanlage zur Erreichung von TI zum programmierten Zeitpunkt $tx_1$
tve*1 optimierte Vorhaltezeit für Einschalten der Heizungsanlage
tein1 letzter aktueller Einschaltzeitpunkt
tva1 Vorhaltezeit für Ausschalten der Heizungsanlage, sodass zum programmierten Zeitpunkt $tx_2$ gerade noch TI vorhanden ist
tva*1 optimierte Vorhaltezeit für das Ausschalten der Heizungsanlage
taus1 letzter aktueller Ausschaltzeitpunkt
TVmax maximaler Temperatur Vorlauf

So/Wi Sommer/Winter-Automatikbetrieb

Wärmeerzeuger:

TA I Aussentemperatur bezogen auf 1. Heizkessel
TA II Aussentemperatur bezogen auf 2. Heizkessel
$t_{min}$ minimale Brennerlaufzeit pro Einschaltung
$tv_{1-2}$ Verzögerung für Einschalten des 2. Heizkessels gegenüber dem 1. Heizkessel

Wartung:

- Grenzwerteinsteller für Kaminwartungsanzeige
- Grenzwerteinsteller für Brennerwartungsanzeige

Nebenheizkreis:

F2 Fixpunkt(Vorlauftemperatur)-Einstellung der Heizkurve bei +15° C TA
K2 Klimapunkt(Vorlauftemperatur)-Einstellung der Heizkurve bei -10° C TA
tve2 Vorhaltezeit für Einschalten der Heizungsanlage zur Erreichung von TI zum programmierten Zeitpunk $tx_1$
tva2 Vorhaltezeit für Ausschalten der Heizungsanlage, sodass zum programmierten Zeitpunkt $tx_2$ gerade noch TI vorhanden ist
tein2 letzter tatsächlicher Einschaltzeitpunkt
taus2 letzter tatsächlicher Ausschaltzeitpunkt

Brauchwasserkreis:

TBsoll Solltemperatur Brauchwasserspeicher
TKmaxB maximale Temperatur des Wärmeerzeugers bei Brauchwasserladung

Bedienungsebene IV:

Die Bedienungsebene IV ist nur für Berechtigte mit Berechtigungsschlüssel zugänglich und in ihr können die in der Bedienungsebene III gesperrten Parameter eingestellt werden.

Die Bedienungsebene IV wird angewählt wie die Bedienungsebene III, d.h. durch Betätigen der Tastenfelder $44_1$ bis $44_4$. Damit die Parameter, die in der Bedienungsebene III nur angezeigt werden, verstellt werden können benötigt man den Berechtigungsschlüssel 56, der in den Anschluss 52 der Bedienungsplatte 36 einzustecken ist. Danach können sämtliche nur für berechtigte Personen, wie beispielsweise das Fachpersonal, zugängliche Parameter nach dem gleichen Vorgehen wie in der Bedienungsebene III eingestellt werden.

Es können beispielsweise folgende Parameter abgefragt und mittels Berechtigungsschlüssel eingestellt werden:
TKmin minimale Temperatur des Wärmeerzeugers
TKmax maximale Temperatur des Wärmeerzeugers

SD Schaltdifferenz zwischen Ein/Ausschalten des Wärmeerzeugers

$T_{min}$ minimale Brennerlaufzeit pro Einschaltung

$t_{V1-2}$ Verzögerung für Einschaltung des 2. Heizkessels gegenüber dem 1. Heizkessel

Nachfolgend werden noch einige spezifische Betriebs- und Anzeigebeispiele beschrieben.

Beispiel 1

Soll ausgehend vom Normalbetrieb der Figur 1 eine andere Betriebsart gewählt werden, wie beispielsweise Sommerbetrieb mit Brauchwasser, so ist wie aus Fig. 6 hervorgeht das entsprechende Tastenfeld $40_4$ zu drücken, worauf das Tastenfeld $40_1$ UHR von der inversen in die normale und das Tastenfeld $40_4$ HAHN von der normalen in die inverse Darstellung wechselt, wodurch angezeigt wird, dass die Betriebsart des Tastenfeldes $40_1$ ausgeschaltet und die Betriebsart des Tastenfeldes $40_4$ eingeschaltet ist. Im Hydraulikschema wechseln dann bei Brauchwasserbedarf zusätzlich die Anzeigeelemente 84, 86 der Umwälzpumpen 24, 26 von invers auf normal und das Anzeigeelement 90 des Mischorgans 34 wechselt von der mittleren Inversanzeige auf die Normalanzeige und das Anzeigeelement 90a von der Normalanzeige in die Inversanzeige. Es wird also angezeigt, dass die Brauchwasserladepumpe 28 in Betrieb ist und das Mischorgan 34 die Bypassleitung sowie den Hautpheizkreislauf sperrt, indem das entsprechende Anzeigeelement 90a von normal auf invers wechselt.

Beispiel 2

Soll die aktuelle Temperatur TK des Wärmeerzeugers abgelesen werden, so wird ausgehend vom Normalbetrieb der Figur 1 mittels des Tastenfeldes $40_5$ PRG die Bedienungsebene II angewählt, wie aus Figur 7 hervorgeht. Durch Betätigen des Tastenfeldes $42_5$ TK = Temperatur des Wärmeerzeugers erscheint auf der Bedienungsplatte 36 die Anzeige "Aktuelle Temperatur des Wärmeerzeugers 50 ̊ C" wie aus Figur 8 hervorgeht. Man kann nun das Heizungssteurgerät sich selbst überlassen, dann kehrt die Anzeige an der Bedienungsplatte nach einer bestimmten Zeitdauer in die Bedienungsebene I, Normalbetrieb mit Standardanzeige (Figur 1) zurück oder man bewirkt das Zurückschalten in die Bedienungsebene I durch ein- oder mehrmaliges Betätigen des Tastenfeldes $42_1$ WEITER bis im Tastenfeld $42_1$ END erscheint, worauf durch nochmaliges Betätigen des Tastenfeldes $42_1$ END das Heizungssteuergerät und die Anzeige in die Bedienungsebene I zurückkehren.

Beispiel 3

Zur Einstellung des Sollwertes der Raumtemperatur während des Tages wird ausgehend vom Normalbetrieb der Figur 1 das Tastenfeld $40_5$ PRG gedrückt, worauf das Heizungssteuergerät in die Bedienungsebene II gemäss Figur 7 gebracht wird. Es erscheinen daraufhin die Tastenfelder $42_1$ bis $42_7$ mit dem Bezeichnungen:

WEITER Weiterschalten
TR Temperatur Rauchgas
TB Temperatur Brauchwasserspeicher
TV Temperatur Vorlauf
TK Temperatur Wärmeerzeuger
TI Temperatur Raum
TA Temperatur Aussen.

Durch Drücken des Tastenfeldes $42_1$ WEITER wechselt die Anzeige der Tastenfelder $42_1$ bis $42_7$, wobei nur noch die Tastenfelder $42_1$ bis $42_5$ erscheinen mit den Bezeichnungen (Fig. 9):

END Ende
UHR Einstellen Uhrzeit
SONNE 1 Einstellen Tagtemperatur voll
SONNE 2 Einstellen Tagtemperatur reduziert
MOND Einstellen Nachttemperatur.

Durch Betätigen des Tastenfeldes $42_3$ SONNE 1 erscheint die Anzeige "Soll-Raumtemperatur Tag 20,5 ̊ C" und die Tastenfelder $42_1$ bis $42_4$ wechseln in die Tastenfelder $42_1$ bis $42_3$ mit den neuen Bezeichnungen (Fig. 10):

ENTER Eingabe des Einstellwertes
- Vermindern des Sollwertes
+ Erhöhen des Sollwertes.

Durch Betätigen der Tastenfelder $42_3$, $42_2$ +/- kann der Sollwert erhöht oder vermindert werden. Wenn der richtige neue Sollwert erreicht ist, kann er durch Betätigen des Tastenfeldes $42_1$ ENTER abgespeichert werden. Daraufhin wechselt das untere Tastenfeld $42_1$ bis $42_3$ der Figur 10 in jenes der Figur 9. Wenn keine weitere Einstellung mehr vorgenommen werden soll, ist das Tastenfeld $42_1$ END zu drücken, worauf das Heizungssteuergerät in die Bedienungsebene I und den Normalbetrieb gemäss Figur 1 zurückkehrt.

Beispiel 4

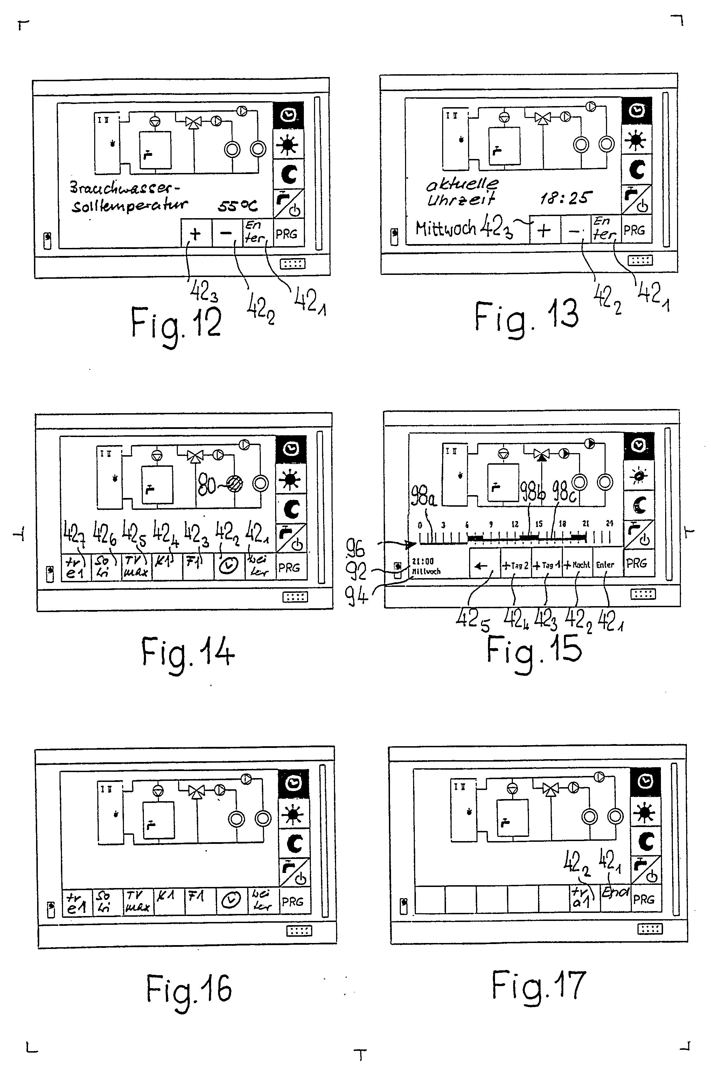

Zur Einstellung der Solltemperatur TBsoll des Brauchwassers ist ausgehend vom Normalbetrieb der Figur 1 das Tastenfeld $44_2$ für den Brauchwasserspeicher 78 des Hydraulikschemas 76 zu betätigen, worauf am unteren Rand der Bedienungsplatte 36 die in Figur 11 dargestellten Tastenfelder $42_1$ bis $42_4$ mit der Bezeichnung erscheinen:

END Ende
UHR Schaltuhrbetrieb
TBsoll Solltemperatur Brauchwasserspeicher
TKMaxB maximale Temperatur Wärmeerzeuger für Brauchwasserladung.

Es ist dann das Tastenfeld $42_3$ zu betätigen, worauf die in Figur 12 gezeigte Anzeige erscheint: "Brauchwasser - Solltemperatur 55° C". Ferner wechseln die unteren Tastenfelder $42_1$ bis $42_4$ in jene der Figur 12, d.h. $42_1$ bis $42_3$:
ENTER Eingabe
- Vermindern
+ Erhöhen.

Durch Betätigen der Tastenfelder $42_2$ oder $42_3$ -/+ kann die gewünschte Solltemperatur TBsoll des Brauchwassers eingestellt und durch Betätigen des Tastenfeldes $42_1$ ENTER eingespeichert werden. Es erscheint daraufhin die Anzeige gemäss Figur 11. Sollen keine weiteren Einstellungen vorgenommen werden, so ist das Tastenfeld $42_1$ END zu betätigen und die Anzeige sowie die Bedienungsebene gehen in jene der Figur 1 zurück.

Beispiel 5

Zur Einstellung der Uhrzeit ist wiederum ausgehend vom Normalbetrieb gemäss Fig. 1 das Tastenfeld $40_5$ PRG zu drücken, worauf das Heizungssteuergerät in die Bedienungsebene II umgestellt wird und die Anzeige gemäss Figur 7 erscheint. Durch Betätigen des Tastenfeldes $42_1$ WEITER erscheint die Anzeige gemäss Figur 9. Durch Betätigen des Tastenfeldes $42_2$ UHR erscheint die Anzeige gemäss Figur 13 mit Darstellung der "aktuellen Uhrzeit 18:25" und des aktuellen Wochentages "Mittwoch" sowie dem umgestellten Tastenfeld $42_1$ bis $42_3$: ENTER = Eingabe; - = Vermindern + = Erhöhen. Mittels der entsprechenden Tastenfelder $42_2$, $42_3$ kann die Uhrzeit entsprechend eingestellt und durch Betätigen des Tastenfeldes $42_1$ eingegeben und gespeichert werden. Nach Beendigung dieses Vorganges erscheint wieder das Tastenfeld gemäss Figur 9. Durch Betätigen des Tastenfeldes $42_1$ END nimmt das Heizungssteuergerät den Normalbetrieb gemäss Figur 1 wieder ein.

Beispiel 6

Zur Anzeige und Einstellung des Zeitprogrammes des Hauptheizkreises ist wiederum ausgehend vom Normalbetrieb gemäss Figur 1 das Tastenfeld $44_3$ für den Hauptheizkreis 80 im Hydraulikschema zu betätigen, worauf die Anzeige gemäss Figur 14 erscheint. Die Tastenfelder $42_1$ bis $42_7$ erhalten dabei die Bezeichnungen:

WEITER Weiterschalten
UHR Uhrzeit bei Schaltuhrbetrieb
F1 Fixpunkt(Vorlauftemperatur)-Einstellung der Heizkurve bei +15° C TA
K1 Klimapunkt(Vorlauftemperatur)-Einstellung der Heizkurve bei -10° C TA
TVmax maximale Vorlauftemperatur
So/Wi Sommer/Winter-Automatikbetrieb
tve1 Vorhaltezeit beim Einschalten der Heizungsanlage zur Erzielung von TI zum programmierten Zeitpunkt tx.

Es ist nun das Tastenfeld $42_2$ UHR zu betätigen, worauf die Anzeige gemäss Figur 15 erscheint: Anzeige des Betriebsprogrammbalkens 96, der Uhrzeit 92, des Wochentages 94 sowie Umschaltung des Tastenfeldes auf das Tastenfeld $42_1$ bis $42_5$:
ENTER Eingabe
+ NACHT Aufzeichnen des Nachbetriebes
+ TAG 1 Aufzeichnen des Tagbetriebes voll
+ TAG 2 Aufzeichnen des Tagbetriebes reduziert
- Löschung der Aufzeichnung.

Das Programmieren bzw. Aufzeichnen des Betriebsprogrammbalkens 96 beginnt durch Betätigen des Tastenfeldes $42_2$ + NACHT. Solange das Tastenfeld $42_2$ gedrückt ist, wird der Betriebsprogrammbalken 96 beginnend bei 0 Uhr mit dem Anzeigebereich 98a und damit mit dem Programmbereich und den zugehörigen Betriebsdaten versehen. Bei Erreichen der gewünschten Uhrzeit für eine Aenderung wird das Tastenfeld $42_2$ losgelassen und das Tastenfeld $42_3$ + TAG 1 oder + TAG 2 gedrückt und die entsprechenden Anzeigebereiche 98b oder 98c aufgezeichnet, wie aus Figur 15 hervorgeht. Durch Drücken des Tastenfeldes + NACHT kann dann der restliche Anzeigenbereich bis 24 Uhr aufgezeichnet werden. Zum Korrigieren kann mittels des Tastenfeldes $42_5$ - die Aufzeichnung des Betriebsprogrammbalkens kontinuierlich gelöscht werden. Durch Betätigen des Tastenfeldes $42_1$ ENTER wird der für den zugehörigen Wochentag aufgezeichnete Betriebsprogrammbalken abgespeichert und auf den nächsten Wochentag weitergeschaltet. So können alle Wochentage nach derselben Art individuell programmiert werden, d.h. es können also mehrere Aufheizzyklen 98a, 98b, 98c pro Tag individuell eingestellt werden, wobei die programmierten Einschaltzeiten jeweils am Betriebsprogrammbalken angezeigt werden. Durch Drücken des Tastenfeldes $42_1$ ENTER erscheint die Anzeige gemäss Figur 16. Durch Betätigen des Tastenfeldes $42_1$ WEITER rückt das Programm auf die Anzeige gemäss Figur 17 weiter, wobei am unteren Rand der Bedienungsplatte die Tastenfelder $42_1$, $42_2$: END = Ende und tva1 = Vorhaltezeit zum Ausschalten der Heizungsanlage, sodass zum programmierten Zeitpunkt $tx_2$ gerade noch die Raumtemperatur TI vorhanden ist, das heisst, praktisch noch nicht abgesunken ist. Durch Betätigen des Tastenfeldes 42₁ END wird das Heizungssteuergerät wieder in die Bedienungsebene I, d.h. den Normalbetrieb gemäss Figur 1 zurückgeführt.

Beispiel 7

Durch den Anschluss eines programmierten Rechners 54 gemäss Figur 2 an den Anschluss 52 der Bedienungsplatte 36 des Heizungssteuergerätes gemäss den Figuren 1 und 2 kann das Heizungssteuergerät in allen Teilen überprüft werden. Dabei können die einzelnen Betriebsarten, Zustände und Parameter simuliert werden, sodass beispielsweise auch im Sommerbetrieb geheizt werden kann. Auf dem Bildschirm 104 des Rechners 54 können die verschiedenen Kennlinien des Mischers, Wärmeerzeugers und Brauchwasserspeichers angegeben werden. In der Figur 2 ist beispielsweise die Kennlinie des Mischers dargestellt. Es ist auch möglich, mittels des angeschlossenen Rechners anzuzeigen und mittels eines etwaigen Druckers die Betriebsdaten auszudrucken. Durch eine Prüf-Software für den Rechner können auch längere Ueberwachungen des Heizungssteuergerätes durchgeführt werden.

Bei der Darstellung der Mischerkennlinie wird die Aussentemperatur TA verändert und es kann dabei auf dem Bildschirm direkt verfolgt werden, wie die Vorlauftemperatur TV der Kennlinie folgt. In einer solchen Darstellung wird auch der Einfluss einer Brauchwasserladung sichtbar.

Bei der Darstellung der Heizkennlinie des Wärmeerzeugers kann ebenfalls die Aussentemperatur verändert werden und gezeigt werden, wie die Heizkesseltemperatur der Kennlinie folgt. In einer solchen Darstellung wird auch der Einfluss einer Brauchwasserladung sichtbar.

Die Brauchwasserladung kann als Zeitfunktion dargestellt werden. Die Brauchwassertemperatur wird als Funktion der Zeit verändert, wobei gleichzeitig Vorlauf- und Heizkesseltemperatur dargestellt werden.

Gleichzeitig zu den Bilddarstellungen werden die Ausgangszustände des Reglers angezeigt.

Es sind noch zahlreiche weitere Ausführungsbeispiele möglich, so können für den Wärmeerzeuger nicht nur Oel- oder Gasbrenner verwendet werden, sondern auch Holz- und Kohlefeuerungen, Elektrospeicher, Wärmepumpen, Wärmetauscher für den Anschluss an Fernheizungen und dergleichen. Dementsprechend können auch zahlreiche andere oder zuätzliche Parameter angezeigt und eingestellt werden.

Die Bedienungsplatte muss nicht einstückig sind, sondern kann in Bedienungsteile unterteilt sein, die räumlich voneinander getrennt angeordnet sein können.

Bezugszeichenliste

2 Mikroprozessor
4 Datenspeicher
6 Programmspeicher
8 Eingang
10 Aussenfühler
12 Raumfühler
14 Kesselfühler
15 Vorlauffühler
16 Brauchwasserfühler
18 Rauchgasfühler
20 Fernversteller
22 Ausgang
24 1. Umwälzpumpe
26 2. Umwälzpumpe
28 Brauchwasserladepumpe
29 Wärmeerzeuger
30 1. Heizkessel
32 2. Heizessel
34 Mischorgan (3Punkt)
36 Bedienungsplatte
38 Schaltplatte
40₁₋₅ Tastenfeld
42₁₋₇ Tastenfeld
44₁₋₄ Tastenfeld
46 Multifunktionsdisplay
48 Anzeigesteuergerät
50 Umschalter
52 Anschluss
54 Rechner
56 Berechtigungsschlüssel
58 Hartüberzug
60 Frontseitenpolyesterfilm
62 Frontseitenelektrode
64 Dichtung
66 Distanzhalter
68 Rückseitenelektrode
70 Rückseitenpolyesterfilm
72 Pufferschicht
74 Folie
76 Hydraulikschema
78 Brauchwasserspeicher
80 Hauptheizkreis (44₃)
82 Nebenheizkreis (44₄)
84 Anzeigeelement für 24
86 Anzeigeelement für 26
88 Anzeigeelement für 28
90 Anzeigeelement für 34
90a Anzeigeelement für 34
92 Uhrzeitanzeige
94 Wochentaganzeige
96 Betriebsprogrammbalken
98a Anzeigebereich von 96

98b Anzeigebereich von 96
98c Anzeigebereich von 96
100 Anzeigeelement für Brennerwartung
102 Anzeigeelement für Kaminwartung
104 Bildschirm

## Ansprüche

1. Heizungssteuergerät, mit einem Programmspeicher (6) und einem Mikroprozessor (2) sowie mit einer Bedienungsplatte (36) mit Anzeigeelementen (84, 86, 88, 90) und Schalttasten ($40_{1-5}$, $42_{1-7}$, $44_{1-4}$), dadurch gekennzeichnet, dass die Bedienungsplatte (36) eine mit dem Mikroprozessor (2) verbundene transparente Schaltplatte (38) mit Tastenfeldern ($40_{1-5}$, $42_{1-7}$, $44_{1-4}$) aufweist, unter welcher ein über ein Anzeigesteuergerät (48) mit dem Mikroprozessor (2) verbundener Multifunktionsdisplay (46) zur direkten Anzeige der Einstellparameter und der aktivierten Anzeigefelder sowie der aktivierten Tastenfelder und ferner zur analogen Anzeige des Betriebszustandes der Heizungsanlage in einem Hydraulikschema angeordnet ist.

2. Heizungssteuergerät nach Anspruch 1, dadurch gekennzeichnet, dass die Bedienungsplatte (36) Tastenfelder ($40_{1-5}$) erster Art zur Ein/Aus-Schaltung und direkten Anzeige von im Programmspeicher (6) direkt zugeordneten programmierten Betriebsarten, wie mindestens eine der Betriebsarten: Automatikbetrieb nach Schaltuhr, Tagbetrieb, Nachtbetrieb, Sommerbetrieb mit Brauchwasser; sowie vorzugsweise zur Anzeige des Schaltzustandes aufweist.

3. Heizungssteuergerät nach Anspruch 1 oder 2, dadurch gekennzeichnet, dass die Bedienungsplatte (36) mindestens ein Tastenfeld ($40_5$, $44_{1-4}$) zur Weiterschaltung auf mindestens eine der folgenden Bedienungsebenen und zur Anzeige von deren Parameter aufweist:

a) Bedienungsebene I: Normalbetrieb mit Anzeige des Hydraulikschemas der Heizungsanlage sowie mindestens des Betriebsprogrammbalkens (96) des Hauptheizkreises (80), sowie gegebenenfalls der Uhrzeit (92), des Wochentages (94), der Aussentemperatur (TA) und der Raumtemperatur (TI);

b) Bedienungsebene II: Abfrage von Temperaturen (TB, TV, TK, TI, TA) sowie Anzeige und Einstellung von Uhrzeit (92) und Raumtemperatur (TI);

c) Bedienungsebene III: Anzeige und Einstellung von Parametern (TIsoll, TBsoll, F1, F2, K1, K2 SO/WI) der Heizungsanlage, die für den Benützer zugänglich sind;

d) Bedienungsebene IV: Anzeige von Parametern (TKmin, TKmax, SD) des Wärmeerzeugers (29), sowie deren Einstellung mittels Berechtigungsschlüssel (56).

4. Heizungssteuergerät nach einem der Ansprüche 1 bis 3, dadurch gekennzeichnet, dass die Bedienungsplatte (36) bestimmten Aggregaten (24, 26, 28, 34) des Hydraulikschemas (76) der Heizungsanlage zugeordnete Tastenfelder ($44_{1-4}$) und/oder Anzeigefelder (30, 32, 84, 86, 88, 90, 90a) aufweist.

5. Heizungssteuergerät nach einem der Ansprüche 1 bis 4, dadurch gekennzeichnet, dass das Hydraulikschema (76) mittels des Multifunktionsdisplays (46) das Hydraulikschema (76) darstellbar ist.

6. Heizungssteuergerät nach einem der Ansprüche 1 bis 5, dadurch gekennzeichnet, dass die Bedienungsplatte (36) eine Reihe von Tastenfeldern ($42_{1-7}$) zweiter Art aufweist, die individuell aktivierbar und in ihrer Funktion umschaltbar sind und zur Anzeige und/oder Einstellung von Parametern sowie zum Weiterschalten der Tastenfelder dienen.

7. Heizungssteuergerät nach einem der Ansprüche 1 bis 6, dadurch gekennzeichnet, dass es einen Umschalter (50) von Handbetrieb auf Automatikbetrieb und umgekehrt aufweist.

8. Heizungssteuergerät nach einem der Ansprüche 1 bis 7, dadurch gekennzeichnet, dass es einen Schnittstellen-Anschluss (52) für einen programmierten Rechner zur Funktionsprüfung und/oder Einstellung und/oder Messdatenübertragung aufweist.

9. Heizungssteuergerät nach einem der Ansprüche 1 bis 8, dadurch gekennzeichnet, dass es einen Anschluss (52) für einen Berechtigungsschlüssel (56) zum Zugriff und zur Veränderung geschützter Parameter aufweist.

10. Heizungssteuergerät nach einem der Ansprüche 1 bis 9, dadurch gekennzeichnet, dass der Betriebsprogrammbalken (96) mindestens drei Anzeigebereiche (98a, 98b, 98c) für verschieden hohe Temperaturen aufweist.

11. Heizungssteuergerät nach einem der Ansprüche 1 bis 10, dadurch gekennzeichnet, dass die Bedienungsplatte (36), vorzugsweise im Symbol des Hydraulikschemas (76) für den Wärmeerzeuger (29), Anzeigeelemente (100, 102) für Grenzwerte wie ein Anzeigeelement (100) für Brennerwartung und/oder ein Anzeigeelement (102) für Kaminwartung aufweist.

12. Heizungssteuergerät nach einem der Ansprüche 1 bis 11, dadurch gekennzeichnet, dass die Bedienungsplatte (36) in mindestens zwei Bedienungsplattenteile unterteilt ist, die räumlich voneinander entfernt angeordnet sind.

**Fig. 1**

**Fig. 2**

**Fig.3**

**Fig. 4**

Fig. 5

Fig. 6

Fig. 7

Fig. 8

Fig. 9

Fig. 10

Fig. 11

**Fig. 12**

**Fig. 13**

**Fig. 14**

**Fig. 15**

**Fig. 16**

**Fig. 17**

Europäisches Patentamt

EUROPÄISCHER RECHERCHENBERICHT

Nummer der Anmeldung

EP 89 10 3825

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y | US-A-4386649 (HINES) <br> * Anspruch 1; Figuren 1-11 * | 1 | G05D23/19 |
| A | | 2, 3 | |
| | --- | | |
| Y | ELECTRONIC DESIGN <br> vol. 33, no. 10, Mai 1985, Hasbrouck Heights, New Jersey USA <br> Seite 72E R. WEISS: <br> "Membrane switch integrates LCDs and touch panels" <br> * das ganze Dokument * | 1 | |
| | --- | | |
| A | KLIMAAT BEHEERSING. <br> vol. 13, no. 6, Juni 1984, DOETINCHEM NL <br> Seite 146 - 153; G.W. DRAIJER: <br> "Van analoge naar digitale regelaars: nieuwe techniek toepasbaar in elke installatie" <br> * Figuren 12, 13 * | 1, 4, 5 | |
| | --- | | |
| A | US-A-4017848 (TANNAS) <br> * Zusammenfassung; Figuren 1-10 * | 1 | RECHERCHIERTE SACHGEBIETE (Int. Cl.4 ) |
| | --- | | |
| A | DE-A-2804079 (WONG) <br> * Figur 1 * | 7 | G05D |
| | --- | | |
| A | EP-A-0074868 (LA TELEMECANIQUE ELECTRIQUE) <br> * Seite 7, Zeile 35 - Seite 8, Zeile 25; Figur 2 * | 8 | |
| | --- | | |
| A | DE-A-3234150 (SAMSON) <br> * Figur 5 * | 9 | |
| | --- | | |
| A | GB-A-2146794 (DRAYTON CONTROLS LTD) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 21 JUNI 1989 | GOETZ P.A. |